# EUROPEAN PATENT APPLICATION

(11) **EP 3 147 878 A2**
(43) Date of publication of application: **29.03.2017**
(21) Application number: 15003017.9
(22) Date of filing: 21.10.2015
(51) Int. Cl.: G08B 13/12, B60R 25/10

(54) **ELECTRIFIED NET INTEGRATING A SYSTEM FOR DETECTING AND SIGNALING A FORCING OF THE NET ITSELF**

(30) Priority: 24.09.2015 IT UB20153880
(71) Applicant: Easy Cloud S.r.l., 82027 Pontelandolfo (BN) (IT)
(72) Inventor: Perugini, Michele, 82027 Pontelandolfo (BN) (IT)
(74) Representative: Guella, Paolo

(57) **Abstract**

The invention relates to an electrified net responsive to a forcing of the net itself. The net is manufactured by weaving a single wire capable of conducting electrical current. The wire comprises two ends at which an electrical voltage can be applied, and is woven so as to form a plurality of meshes which are nearly identical to one another. The wire includes a core made of a metal material or carbon fiber, wound by a sheath made of a material which is electrically insulating. By virtue of the presence of the sheath, no short-circuit can occur at the knots of the net where the two wire segments cross each other. The net comprises an electrical voltage generator and an electrical current detector connected to the conductor wire at said ends. The detector allows to detect possible interruptions of the circulation of electrical current in the conductor wire caused, for example, by forcing the net. The detector is connected to a device capable of controlling the emission of an alarm signal when said interruption is detected. The net further comprises a geolocator for determining the geographic position thereof, and a hygrometer, a thermometer and a light meter for measuring the air humidity rate, the temperature and the luminosity in the environment surrounding the net, respectively. These measurements are transmitted, together with the alarm signal, to the subject in charge of receiving said signal when the detector detects an interruption of the circulation of electrical current.

## Description

### Field of application of the invention

The present invention is applied to the field of devices capable of detecting and signaling to third parties the occurrence of certain events or the presence of malfunctions taking place therein.

The devices of the aforesaid type, to which the present invention relates, comprise portioning, lining or containing structures integrating alarm systems suited to detect and signal a forcing of said structures. The devices belonging to this category include, by way of example, the so-called "alarmed" doors and windows, i.e. doors or windows provided with an alarm system which, when active, emits a signal, generally an auditory signal, whenever the door or window is opened.

In particular, the present invention relates to an electrified net, used as container for transferring packages from one location to another, suited to signal a forcing, generally carried out for the purpose of theft, during said transfer.

In other words, the present invention relates to an electrified net responsive to a forcing of the net itself.

### Overview of the prior art

Electrified nets are generally manufactured by appropriately weaving a plurality of wires capable of conducting electrical current. By applying an adequate electrical voltage to two terminals of the net, the latter is traveled by an electrical current. When someone attempts to cut one of the conductor wires which forms a net, if the cutting is performed using a cutting tool which is also capable of conducting electrical current, the person gripping the cutting tool may receive a current discharge when cutting. The risk of receiving an electrical shock is a deterrent for those who want to force the net. Also after cutting a conductor wire, the direct electrical current continues to flow in the net traveling the uncut conductor wires, thus keeping the electrification.

However, today's electrified nets cannot detect or signal the cutting of one of the conductor wires which form them.

### Summary of the invention

It is the object of the present invention to overcome the aforesaid drawbacks by indicating an electrified net comprising means for detecting a possible interruption of the circulation of electrical current in a wire of said net and means for emitting an alarm signal as a consequence of such an interruption.

It is thus an object of the present invention an electrified net comprising at least one wire capable of conducting electrical current, said wire comprising at least a first and a second end at which an electrical voltage can be applied, a plurality of meshes at least partially delimited by said conductor wire, and means suited to apply an electrical voltage at said ends, wherein, according to the invention, the wire is woven so that, when an electrical voltage is applied to said ends, said wire can be traveled by an electrical current along one and only one path, the net further comprising:
- means adapted to detect a possible interruption of the circulation of electrical current in the conductor wire when an electrical voltage is applied to said ends;
- means suited to emit an alarm signal;
- means for activating said emission means when the detection means detect said interruption.

The assertion that the conductor wire can be traveled by an electrical current along one and only one path means that the net is manufactured by weaving a single conductor wire or a plurality of conductor wires joined together at the ends by means of bridges capable of conducting electrical current, so that the latter can cross the net along only one path.

If the net of the invention is manufactured by weaving a single conductor wire, the latter is appropriately bent to form multiple segments which correspond, for example, to the wefts and warps of the net. Said segments are crossed and knotted to one another so as to create a plurality of meshes. An embodiment of the net thus made will be disclosed below in the present description.

If the net object of the invention is manufactured by weaving a plurality of conductor wires, it could comprise, by way of example, multiple wires crossed with one another to form a "simple torsion" net and mutually joined at the ends so as to form a serpentine-like path. More specifically, with reference to a simple torsion net arranged so that its wires are directed vertically, each wire is crossed by a pair of wires arranged to the right and left thereof, respectively. In order to have a single path along which the electrical current can flow, each wire of the net is, for example, connected at its upper end to the upper end of the wire to its right and at its lower end to the lower end of the wire to its left. A serpentine-shaped path is thus created with loops at the lower and upper edges of the net. Since, for the purposes of the invention, the presence of a single conductor wire corresponds to the presence of a plurality of wires joined to one another so that an electrical current can cross the net along one path only, in the present description reference will be made below only to the case in which the net is obtained by weaving a single conductor wire for simplicity.

When an electrical voltage is applied to the ends of the conductor wire, said voltage causes an electrical current which crosses the net. Since said current may travel the wire along one path only, cutting the wire in any point of the net will interrupt the circulation of current. When this occurs, this event is detected by the detection means and then signaled to third parties by the emission means. Unlike today's electrified nets, the net object of the invention can thus detect and signal a cutting of the conductor wire forming it.

Further innovative features of the present invention are described in the dependent claims.

According to an aspect of the invention, the wire comprises a core made of a first material capable of conducting electrical current, wrapped by a sheath made of a second material which is electrically insulating.

Advantageously, by virtue of the presence of the sheath, no short-circuits can occur at the points in which the wire is crossed or knotted.

By way of example, said first material is a metal material or is carbon fiber. In the latter case, the net object of the invention is advantageously flexible and has a very high ultimate tensile stress.

According to another aspect of the invention, the alarm signal which can be emitted by the emission means is an auditory signal.

According to another aspect of the invention, the emission means comprise transceiver means connectable to a mobile telephone network (by way of example, of second or third generation).

In such a case, the alarm signal can be encoded and transmitted in the form of electromagnetic radiofrequency waves so as to be received even at a great distance from the net object of the invention (e.g. by means of a mobile telephone or terminal connected to the Internet, such as a smartphone).

This aspect of the invention is extremely advantageous when, by way of example, the alarm signal cannot be auditory or the subject in charge of receiving the alarm signal is, for example, an electronic device or a person that is not close to the net.

According to another aspect of the invention, the net comprises means for geolocating it, the alarm signal emitted by the transceiver means further comprising information on the geographic position of the net when the detection means detect said interruption. By way of example, the geolocation means use GPS technology.

Concurrently with the signaling of an interruption of the current circulation in the net (and thus of a probable breakage of the conductor wire), the location where the net is when said interruption occurs is thus communicated.

This aspect of the invention is extremely advantageous when, by way of example, the net is used as anti-theft device for shipping goods. More specifically, for example by wrapping in the net a package which is being sent from one location to another, when the net is broken in at least one point to access the package, the subject in charge of receiving the alarm signal will be aware of that the package is about to be opened and of the location where the package is. According to another aspect of the invention, the net further comprises first means suited to measure the air humidity rate in the environment surrounding the net, the alarm signal emitted by the transceiver means further comprising information on the humidity rate measured when the detection means detect said interruption. By way of example, the first measuring means comprise a hygrometer.

Therefore, the air humidity rate in the environment surrounding the net when an interruption occurs is communicated concurrently with the signaling of said interruption of the current circulation in the net.

According to another aspect of the invention, the net further comprises second means suited to measure the atmospheric temperature in the environment surrounding the net, the alarm signal emitted by the transceiver means further comprising information on the temperature measured when the detection means detect said interruption. By way of example, the second measuring means comprise a thermometer.

Therefore, the atmospheric temperature in the environment surrounding the net when an interruption occurs is communicated concurrently with the signaling of said interruption of the current circulation in the net.

According to another aspect of the invention, the net further comprises third means suited to measure the luminosity in the environment surrounding the net, the alarm signal emitted by the transceiver means further comprising information on the luminosity measured when the detection means detect said interruption. By way of example, the third measuring means comprise a light meter. Therefore, the luminosity in the environment surrounding the net when an interruption occurs is communicated concurrently with the signaling of said interruption of the current circulation in the net.

As mentioned with reference to the presence of geolocation means, the three aspects of the invention set forth above may be advantageous when, by way of example, the net is used for shipping goods. For example, by wrapping in the net a package which is being sent from one location to another, when the net is broken in at least one point in order to access the package, the subject in charge of receiving the alarm signal will be aware of that the package is about to be opened, of the humidity rate and/or temperature and/or luminosity of the location where the package is. This is extremely important if certain humidity and/or temperature and/or luminosity parameters are to be respected when the package is opened.

By way of example, the transceiver means periodically transmit the aforesaid information on geographic position, humidity rate, atmospheric temperature and luminosity to the subject in charge of receiving the alarm signal. Additionally or alternatively, the transceiver means transmit the aforesaid information when requested by said subject. Thereby, the latter can monitor the humidity rate, the atmospheric temperature and the luminosity in the location where the package is during the shipping.

### Brief description of the drawings

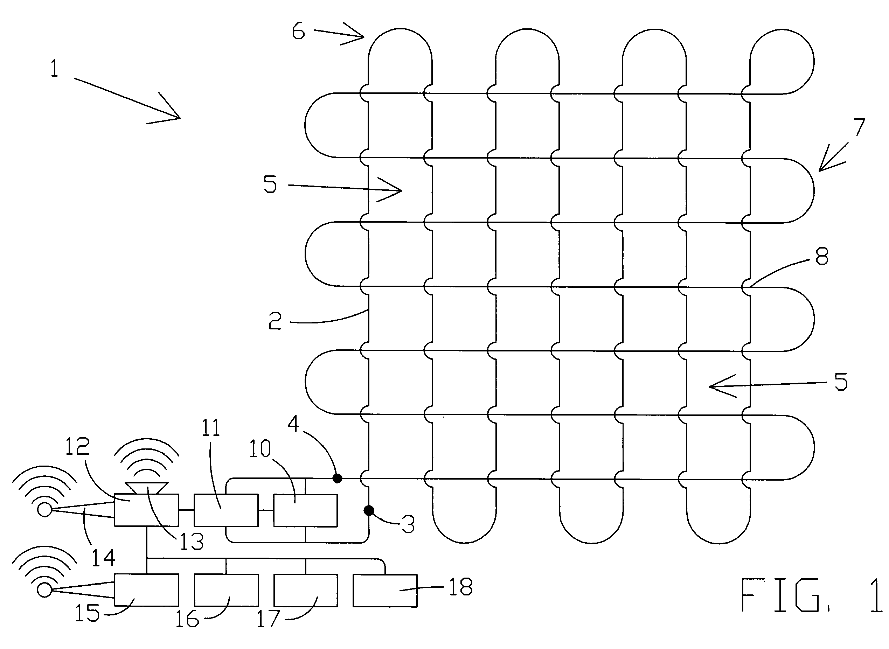

Further objects and advantages of the present invention will become apparent from the following detailed description of an embodiment thereof and from the accompanying figure, given by way of mere non-limiting example, showing a diagrammatic plan view of an electrified net according to the present invention. Hereinafter in the present description, the figure may also be disclosed with reference to elements not expressly indicated thereon. The scale and proportions of the various depicted elements do not necessarily correspond to the real values.

### Detailed description of preferred embodiments of the invention

The figure accompanying the present description shows a net 1 manufactured by weaving a single wire 2 capable of conducting electrical current. Wire 2 comprises a first end 3 and a second end 4 at which an electrical voltage can be applied. Wire 2 is woven so as to form a plurality of meshes 5 preferably nearly identical to one another. In particular, wire 2 is preferably arranged so as to form a pair of serpentines 6 and 7 mutually overlapping and turned with respect to each other, by way of example, by 90°. More specifically, starting from the end 3 visible on the bottom left in the figure, wire 2 describes a first serpentine 6, the rectilinear and mutually parallel segments of which are, by way of example, arranged vertically in the figure. At the end of serpentine 6 (on the top right, in the figure), wire 2 describes the second serpentine 7, the straight segments of which, also mutually parallel, are arranged horizontally in the figure (by way of example) so as to cross the straight segments of serpentine 6 thus forming a plurality of nearly square meshes 5. Thereby, net 1 takes an appearance similar to that of a checkerboard. Serpentine 7 ends at end 4 preferably placed close to end 3. At the vertexes 8 of the meshes 5 (i.e. at the points in which the serpentines 6 and 7 cross each other), each segment of wire 2 is preferably knotted to the segment of wire 2 crossed therewith. This prevents the sides of the meshes 5 from changing length. As clearly shown in the figure, all the meshes 5 are delimited by wire 2.

The above-described weaving of wire 2 is provided by way of mere example. Those skilled in the art may weave wire 2 otherwise without departing from the scope of the invention. More specifically, although the nets are usually manufactured by weaving a plurality of wires, the manufacture of a net using a single wire is an operation which those skilled in art are able to perform. Therefore, no further details will be provided.

By way of example, wire 2 comprises a core, preferably made of metal material or carbon fiber, and wrapped by a sheath made of a material which is electrically insulating, e.g. a plastic material. Short-circuit cannot occur at the knots 8 by virtue of the presence of the insulating sheath. This means that, following the application of an appropriate electrical voltage at the ends 3 and 4, the wire 2 can be traveled by an electrical current along one and only one path. In contrast to the common electrified nets, cutting wire 2 interrupts the current circulation in net 1.

Net 1 further comprises an electrical voltage generator 10 and an electrical current detector 11 connected to wire 2 at the ends 3 and 4. By means of generator 10, a voltage may thus be applied to the ends 3 and 4 of wire 2. By means of detector 11, it is possible to establish whether an electrical current circulates in wire 2 when an appropriate voltage is applied to the ends 3 and 4 thereof. More specifically, by means of detector 11, a possible interruption of the circulation of electrical current can be detected when a voltage is applied to the ends 3 and 4 of wire 2.

Detector 11 (comprising, by way of example, an ammeter) is connected to a device 12 capable of controlling the emission of an alarm signal when detector 11 detects an interruption of the circulation of electrical current. In particular, device 12 is, by way of example, connected to a speaker 13 for emitting an auditory-type alarm signal. Additionally or alternatively to speaker 13, the device 12 is connected to an antenna 14 connectable to a mobile telephone network for transmitting and receiving electromagnetic radiofrequency waves. In such a case, the alarm signal is encoded into electromagnetic waves which can be transmitted by the antenna 14. By way of example, the alarm signal may consist of a text message or a voice message which can be received by means of a mobile telephone, a smartphone or a mobile device connectable to the Internet. Device 12 thus acts as actuating means for the speaker 13 or the antenna 14 when detector 11 detects an interruption of the circulation of electrical current in wire 2.

For clarity, although the manufacture of a net using a single wire is an operation which those skilled in the art can perform, the fact contributing to conferring novelty and originally to the net of the invention is that of using this weaving method to manufacture an electrified net also comprising the detector 11, the device 12 and the emitters 13 and 14 in addition to generator 10. Indeed, if the electrical current could circulate in the net along multiple paths (i.e. if the electrified net were of the traditional type), the operation of cutting a mesh could not result in the interruption of the current circulation, thus preventing the cutting from being detected.

Net 1 may further comprise the following apparatuses 15, 16, 17 and 18 preferably connected to device 12:
- a geolocator 15 for determining the geographic position of net 1 (e.g. by means of GPS technology);
- a hygrometer 16 for measuring the air humidity rate in the environment surrounding net 1;
- a thermometer 17 for measuring the atmospheric temperature in the environment surrounding net 1;
- a light meter 18 for measuring the luminosity in the environment surrounding net 1.

With regard to the disclosure of the operation, wire 2 is traveled by an electrical current between the ends 3 and 4 when generator 10 is working. If wire 2 is either accidentally or deliberately cut, this causes an interruption of the circulation of electrical current, which is detected by detector 11. Following such a detection, device 12 operates the speaker 13 and/or the antenna 14 for the emission of an alarm signal. Net 1 is thus responsive to a forcing of the net itself.

When detector 11 detects an interruption of the circulation of electrical current, the device 12, in addition to operating the speaker 13 and/or the antenna 14, acquires the geographic position, the humidity rate, the atmospheric temperature and the luminosity measured by the apparatuses 15, 16, 17 and 18, respectively, exactly when said interruption is detected. This information is encoded into electromagnetic waves and transmitted by the antenna 14 so as to be included in the alarm signal.

The aforesaid information on geographic position, humidity rate, atmospheric temperature and luminosity are preferably acquired by the device 12 and periodically transmitted by the antenna 14 regardless of whether detector 11 detects an interruption of the circulation of electrical current. Even more preferably, either additionally or alternatively, device 12 can be remotely controlled by means of the antenna 14 and acquires the aforesaid information whenever a corresponding control is received.

On the basis of the description provided for a preferred embodiment, it is apparent that changes may be introduced by those skilled in the art without departing from the scope of the invention as defined by the following claims.

## Claims

1. An electrified net (1) comprising:
• at least one wire (2) capable of conducting electrical current, said wire (2) comprising at least a first and a second end (3, 4) at which an electrical voltage can be applied;
• a plurality of meshes (5) at least partially delimited by said wire (2);
• means (10) for applying an electrical voltage at said ends (3, 4); **characterized in that** said wire (2) is woven so that when an electrical voltage is applied to said ends (3, 4), said wire (2) can be traveled by an electrical current along one and only one path,
said net (1) further comprising:
• means (11) for detecting a possible interruption of the circulation of electrical current in said wire (2) when an electrical voltage is applied to said ends (3, 4);
• means (13, 14) for emitting an alarm signal;
• means (12) for activating said emission means (13, 14) when said detection means (11) detect said interruption.

2. An electrified net (1) according to claim 1, **characterized in that** said wire (2) comprises a core made of a first material capable of conducting electrical current, wrapped by a sheath made of a second material which is electrically insulating, said first material comprising carbon fiber.

3. An electrified net (1) according to claim 1 or 2, **characterized in that** said emission means (14) comprise transceiver means (14) connectable to a mobile telephone network.

4. An electrified net (1) according to claim 3, **characterized in that** it comprises means (15) for geolocating said net (1), said alarm signal comprising information on the geographic position of said net (1) when said detection means (11) detect said interruption.

5. An electrified net (1) according to claim 3, **characterized in that** it comprises first means (16) for measuring the air humidity rate in the environment surrounding said net (1), said alarm signal comprising information on said humidity rate measured when said detection means (11) detect said interruption.

6. An electrified net (1) according to claim 3, **characterized in that** it comprises second means (17) for measuring the atmospheric temperature in the environment surrounding said net (1), said alarm signal comprising information on said temperature measured when said detection means (11) detect said interruption.

7. An electrified net (1) according to claim 3, **characterized in that** it comprises third means (18) for measuring the luminosity in the environment surrounding said net (1), said alarm signal comprising information on said luminosity measured when said detection means (11) detect said interruption.
